# EUROPÄISCHE PATENTSCHRIFT

(11) **EP 1 483 041 B1**
(45) Veröffentlichungstag und Bekanntmachung des Hinweises auf die Patenterteilung: **04.08.2010**
(21) Anmeldenummer: 02724224.7
(22) Anmeldetag: 12.03.2002
(51) Int. Cl.: B01D 69/08, B01D 69/12, B01D 67/00, D06B 3/04

(54) **VERFAHREN ZUR HERSTELLUNG GEWEBEVERSTÄRKTER KAPILLARFÖRMIGER MEMBRANEN, INSBESONDERE FÜR DIE ULTRAFILTRATION**
METHOD FOR PRODUCING FABRIC-REINFORCED CAPILLARY MEMBRANES, IN PARTICULAR FOR ULTRAFILTRATION
PROCEDE POUR PRODUIRE DES MEMBRANES CAPILLAIRES A RENFORT DE TISSU, NOTAMMENT DESTINEES A L'ULTRAFILTRATION

(43) Veröffentlichungstag der Anmeldung: 08.12.2004
(73) Patentinhaber: Koch Membrane Systems GmbH, 52072 Aachen (DE)
(72) Erfinder: VOSSENKAUL, Klaus, 52074 Aachen (DE); SCHÄFER, Stefan, 52074 Aachen (DE)
(74) Vertreter: Albrecht, Rainer Harald
(86) Internationale Anmeldenummer: PCT/EP2002/002699
(87) Internationale Veröffentlichungsnummer: WO 2003/076055

(56) Entgegenhaltungen:
- WO-A-93/18219
- GB-A- 1 540 937
- GB-A- 2 048 726
- US-A- 2 456 650
- US-A- 4 061 821
- US-A- 4 579 079

## Beschreibung

Die Erfindung betrifft ein Verfahren zur Herstellung gewebeverstärkter kapillarförmiger Membranen, insbesondere für die Ultrafiltration, bei dem ein Gewebeschlauch mit einer Polymerlösung beschichtet und durch ein Fällungsbad geführt wird, wobei in dem Fällungsbad eine Umwandlung der Polymerlösung in eine mikroporöse Schicht erfolgt und eine durch den Gewebeschlauch verstärkte Membran gebildet wird.

Bei einem aus US 4 061 821 bekannten Verfahren, von dem die Erfindung ausgeht, wird ein mit einer Polymerlösung beschichteter Gewebeschlauch durch ein Fällungsbad gezogen, wobei der Gewebeschlauch im Fällungsbad an Umlenkrollen geführt ist. Die empfindliche Oberfläche des beschichteten Gewebeschlauches wird durch die Berührung an den Umlenkrollen beschädigt. Insbesondere werden Mikroporen in der Außenhaut der Membran, die im Fällungsbad durch Phaseninversion der Polymerlösung entstehen, durch die mechanische Berührung und Umlenkung des Gewebeschlauches zerstört. Zur Herstellung von Ultrafiltrationsmembranen ist das bekannte Verfahren ungeeignet. Mit dem Verfahren lassen sich allenfalls Mikrofiltrationsmembranen herstellen, die offenere Poren und eine wesentlich weichere Struktur aufweisen als Ultrafiltrationsmembranen.

Aus US-A-2 456 650 ist ein Verfahren zur Beschichtung eines Filaments bekannt, bei dem ein Filament unter Spannung von Förderrollen durch ein flüssiges Beschichtungsmittel gezogen wird. Das Beschichtungsmittel befindet sich in einer ersten Röhre, die an ihrem unteren Ende eine Düse aufweist. Durch die Düse am unteren Ende der Röhre, wird das beschichtete Filament vertikal abwärts in eine zweite Röhre gezogen, die von einer weiteren Flüssigkeit durchströmt wird. Unter der Wirkung dieser Flüssigkeit verfestigt sich die Beschichtung. Das beschichtete Filament und die Flüssigkeit bewegen sich vorzugsweise mit gleicher Geschwindigkeit vertikal abwärts. Das beschichtete Filament wird mittels einer Rollenanordnung abgezogen.

Der Erfindung liegt die Aufgabe zugrunde, das Verfahren zur Herstellung gewebeverstärkter kapillarförmiger Membranen so auszubilden, dass die Membranoberfläche im Fällungsbad keinen mechanischen Beanspruchungen ausgesetzt ist.

Die Aufgabe wird erfindungsgemäß durch ein Verfahren nach Anspruch 1 gelöst. Erfindungsgemäß durchläuft der mit der Polymerlöser beschichtete Gewebeschlauch das Fällungsbad ohne mechanische Berührung von oben nach unten und tritt durch eine unterseitige Düse aus, wobei aus der Düse Flüssigkeit ausströmt, welche eine den Lauf des beschichteten Gewebeschlauches stabilisierende Zugkraft auf die das Fällungsbad verlassende Kapillarmembran ausübt. Die Kapillarmembran wird in der Düse durch die ringförmig um die Membran abströmende Flüssigkeit zentriert. Die Flüssigkeit übt dabei auf die Membran eine in Vorschub gerichtete Kraft aus, die es ermöglicht, dass die Membran mit einer vorgegebenen Geschwindigkeit das Fällungsbad durchläuft. Die Zugkraft ist durch die Strömungsgeschwindigkeit, mit der die Flüssigkeit aus der Düse abströmt, steuerbar.

Eine Vorschubeinrichtung, welche die semipermeable Membranschicht der Kapiiiarmembrane erfasst, ist bei dem efindungsgemäßen Verfahren nicht erforderlich, so dass Beschädigungen der empfindlichen Membranschicht ausgeschlossen sind. Der Gewebeschlauch wird mittels eines regelbaren Vorschubantriebes von einer Vorratsrolle abgezogen und einer in Transportrichtung hinter dem Vorschubantrieb angeordneten Einrichtung zur Beschichtung des Gewebeschlauches zugeführt. Die Geschwindigkeit, mit der der Gewebeschlauch durch das nachgeschaltete Fällungsbad geführt wird, ist durch den Vorschubantrieb steuerbar. Die mit dem Vorschub verbundene mechanische Berührung erfolgt, bevor der Gewebeschlauch mit der Polymerlösung beschichtet wird.

Gemäß einer bevorzugten Ausgestaltung des erfindungsgemäßen Verfahrens durchläuft der mit der Polymerlösung beschichtete Gewebeschlauch ein vertikal angeordnetes Rohr, welches das Fällungsbad enthält und an seinem unteren Ende eine düsenförmige Verjüngung aufweist.

Im Fällungsbad wird das in einem Lösungsmittel gelöste Polymer der Beschichtung in einen Feststoff überführt, wobei das Lösungsmittel in das Fällungsbad übergeht und dabei Mikroporen im Polymer hinterlässt. Eine Anreicherung des Lösungsmittels im Fällungsbad beeinträchtigt die auf dem Gebiet der Membranherstellung auch als Phaseninversion bezeichnete Fällung. Daneben müssen während des Fällungsvorganges vorgegebene Temperaturen eingehalten werden. Gemäß einer bevorzugten Ausführung der Erfindung wird dem Rohr Fällungsmittel in einer Aufgabemenge zugeführt, die so bemessen ist, dass im Fällungsbad Grenzwerte für die Temperatur und/oder die zulässige Lösungsmittelkonzentration eingehalten werden, wobei lediglich ein Teilstrom des dem Rohr zugeführten Fällungsmittels durch die düsenförmige Verjüngung am unteren Ende des Rohres ausströmt und der andere Teil des zugeführten Fällungsmittels aus dem Rohr an anderer Stelle abgezogen wird. Das Fällungsmittel kann beispielsweise an einem unteren Rohrabschnitt zugeführt werden, wobei am oberen Ende des Rohres ein Überlauf abgezogen wird.

Die das Fällungsbad verlassende Kapillarmembran kann ohne Berührung der Membranoberfläche zur weiteren Konditionierung einem Nachfällungsbad zugeführt werden, das unterhalb des Fällungsbades angeordnet ist. Zweckmäßig wird die Kapillarmembran bereits nach Verlassen des Fällungsbades auf Länge geschnitten.

Mit dem erfindungsgemäßen Verfahren ist es auch ohne weiteres möglich, Kapillarmembranen herzustellen, die nur an einem Ende offen und an dem anderen Ende geschlossen sind. Die Herstellung dieses Membrantyps erfolgt auf einfache Weise dadurch, dass der Gewebeschlauch vor seiner Beschichtung oder nach Verlassen des Fällungsbades in vorgegebenen Abschnitten verschlossen wird und dass der das Fällungsbad verlassende Membranschlauch so auf Maß geschnitten wird, dass Kapillarmembranen mit jeweils einem offenen und einem geschlossenen Ende entstehen. Der Gewebeschlauch kann durch thermisches Schweißen oder Ultraschallschweißung verschlossen werden. Eine weitere Möglichkeit des Verschließens besteht darin, dass eine Polymerlösung in den Gewebeschlauch injiziert wird, die im Fällungsbad und/oder einem Nachfällungsbad einen festen Pfropf bildet.

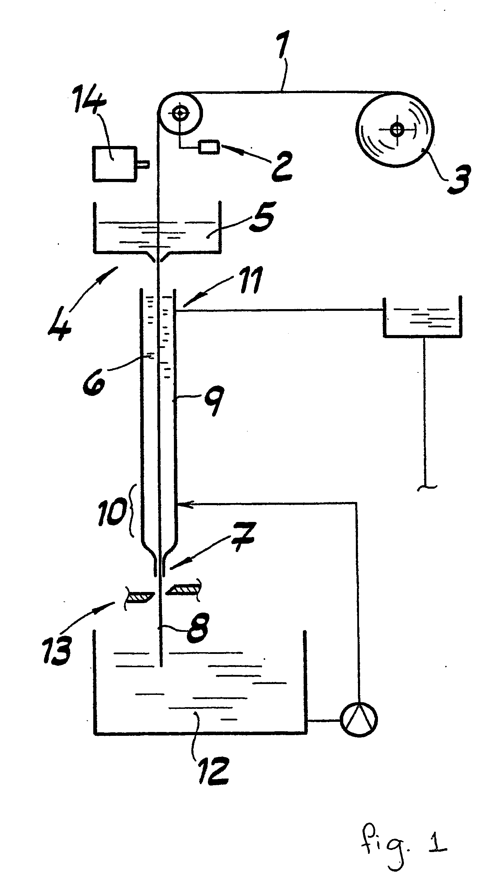

Im folgenden wird das erfindungsgemäße Verfahren anhand einer lediglich ein Ausführungsbeispiel darstellenden Zeichnung erläutert. Die einzige Figur zeigt ein Verfahrensschema zur Herstellung gewebeverstärkter kapillarförmiger Membranen, insbesondere für die Ultrafiltration. Ultrafiltrationsmembranen sind mikroporöse Filtermedien, deren Poren derart klein sind, dass sie eine Barriere nicht nur für Partikel jeglicher Art und Form, sondern auch für sämtliche Mikroorganismen, d.h. Bakterien, Parasiten und Viren darstellen. Die aktive Schicht der Membranen, auch semipermeable Schicht genannt, besteht aus organischen Polymeren, z.B. Polysulfon, Polyethylen, Polypropylen und dergleichen. Die Membranen besitzen in aller Regel einen Außendurchmesser von weniger als 5 mm und werden als Kapillarmembranen, häufig auch als Hohlfasermembranen, bezeichnet. Bevorzugt ist ein Durchmesserbereich zwischen 0,5 und 3 mm.

Bei dem in der Figur dargestellten Verfahren wird ein Gewebeschlauch 1 mittels eines regelbaren Vorschubantriebes 2 von einer Vorratsrolle 3 abgezogen und einer in Transportrichtung hinter dem Vorschubantrieb 2 angeordneten Einrichtung 4 zur Beschichtung des Gewebeschlauches zugeführt. Als Gewebeschlauch 1 sind Produkte einsetzbar, die aus der Herstellung von Kabelummantelungen bekannt und als Massenprodukt verfügbar sind. Nach der außenseitigen Beschichtung mit einer Polymerlösung 5 wird der beschichtete Gewebeschlauch durch ein Fällungsbad 6 geführt, in dem eine Umwandlung der Polymerlösung in eine mikroporöse Membranschicht erfolgt und eine durch den Gewebeschlauch 1 verstärkte Membran gebildet wird. Der Gewebeschlauch 1 durchläuft das Fällungsbad 6 ohne mechanische Berührung von oben nach unten und tritt durch eine unterseitige Düse 7 aus. Aus der Düse 7 strömt auch Flüssigkeit aus, die eine den Lauf des beschichteten Gewebeschlauches stabilisierende Zugkraft auf die das Fällungsbad verlassende Kapillarmembran 8 ausübt. Die aus der Düse 7 abströmende Flüssigkeit bewirkt einen geraden Lauf des Gewebeschlauches 1 im Fällungsbad 6 ohne mechanische Berührung und ohne Umlenkungen.

Das Fällungsbad 6 ist in einem vertikalen Rohr 9 angeordnet, das an seinem unteren Ende eine die Düse 7 bildende Verjüngung aufweist. Das Fällungsmittel, zumeist Wasser, wird beispielsweise an einem unteren Rohrabschnitt 10 zugeführt, wobei lediglich ein Teilstrom durch die düsenförmige Verjüngung 7 am unteren Ende des Rohres 9 ausströmt und am oberen Ende des Rohres 9 ein Überlauf 11 abgezogen wird. Die Aufgabemenge ist so bemessen, dass im Fällungsbad 6 Grenzwerte für die Temperatur und/oder die zulässige Lösungsmittelkonzentration eingehalten werden und insofern ein ausreichender Austausch des Fällungsmittels gewährleistet ist.

Die das Fällungsbad 6 verlassende Kapillarmembran 8 wird ohne Berührung der Membranoberfläche zur weiteren Konditionierung einem Nachfällungsbad 12, z.B einem Wasserbad, zugeführt. Dabei kann sie durch eine zwischen dem Fällungsbad 6 und dem Wasserbad 12 angeordnete Schneideeinrichtung 13 auf Länge geschnitten werden.

Mit dem erfindungsgemäßen Verfahren ist es auch möglich, Kapillarmembranen herzustellen, die an einem Ende offen und an ihrem anderen Ende geschlossen sind. Zur Herstellung einseitig offener Kapillarmembranen wird der Gewebeschlauch 1 vor seiner Beschichtung oder nach Verlassen den Fällungsbades 6 in vorgegebenen Abschnitten z.B. mittels einer Ultraschallschweißeinrichtung 14 verschlossen und wird der das Fällungsbad 6 verlassende Membranschlauch so auf Maß geschnitten, dass Kapillarmembranen mit jeweils einem offenen und einem geschlossenen Ende entstehen.

Mit dem erfindungsgemäßen Verfahren können nicht nur kapillarförmige Membranen für die Ultrafiltration, sondern ohne weiteres auch für andere Membrantrennverfahren, z.B. die Mikrofiltration, Nanofiltration und dergleichen, hergestellt werden.

## Patentansprüche

1. Verfahren zur Herstellung gewebeverstärkter kapillarförmiger Membranen, bei dem ein Gewebeschlauch (1) mit einer Polymerlösung beschichtet und durch ein Fällungsbad (6) geführt wird, wobei in dem Fällungsbad (6) eine Umwandlung der Polymerlösung in eine mikroporöse Schicht erfolgt und eine durch den Gewebeschlauch verstärkte Membran gebildet wird, **dadurch gekennzeichnet, dass** der Gewebeschlauch (1) mittels eines Vorschubantriebes (2) von einer Vorratsrolle (3) abgezogen und einer in Transportrichtung hinter dem Vorschubantrieb (3) angeordneten Einrichtung (4) zur Beschichtung des Gewebeschlauches zugeführt wird und dass der mit der Polymerlösung beschichtete Gewebeschlauch (1) das Fällungsbad (6) ohne mechanische Berührung von oben nach unten durchläuft und durch eine unterseitige Düse (7) austritt, wobei aus der Düse (7) Flüssigkeit ausströmt, welche eine den Lauf des beschichteten Gewebeschlauches stabilisierende Zugkraft auf die das Fällungsbad verlassende Kapillarmembran (8) ausübt und es ermöglicht, dass die Kapillarmembran (8) mit einer durch den Vorschubantrieb (2) vorgegebenen Geschwindigkeit das Fällungsbad (6) durchläuft.

2. Verfahren nach Anspruch 1, **dadurch gekennzeichnet, dass** ein regelbarer Vorschubantrieb (2) verwendet wird.

3. Verfahren nach Anspruch 1 oder 2, **dadurch gekennzeichnet, dass** der mit der Polymerlösung beschichtete Gewebeschlauch ein vertikal angeordnetes Rohr (9) durchläuft, welches das Fällungsbad (6) enthält und an seinem unteren Ende eine düsenförmige Verjüngung aufweist.

4. Verfahren nach Anspruch 3, **dadurch gekennzeichnet, dass** dem Rohr Fällungsmittel in einer Aufgabemenge zugeführt wird, die so bemessen ist, dass im Fällungsbad (6) Grenzwerte für die Temperatur und/oder die zulässige Lösungsmittelkonzentration eingehalten werden, wobei lediglich ein Teilstrom des dem Rohr (9) zugeführten Fällungsmittels durch die düsenförmige Verjüngung am unteren Ende des Rohres ausströmt und der andere Teil des zugeführten Fällungsmittels aus dem Rohr an anderer Stelle (11) abgezogen wird.

5. Verfahren nach Anspruch 4, **dadurch gekennzeichnet, dass** das Fällungsmittel an einem unteren Rohrabschnitt (10) zugeführt und am oberen Ende des Rohres ein Überlauf (11) abgezogen wird.

6. Verfahren nach einem der Ansprüche 1 bis 5, **dadurch gekennzeichnet, dass** die das Fällungsbad (6) verlassende Kapillarmembran (8) ohne mechanische Berührung der Membranoberfläche zur weiteren Konditionierung einem Nachfällungsbad (12) zugeführt wird.

7. Verfahren nach einem der Ansprüche 1 bis 6, **dadurch gekennzeichnet, dass** die Kapillarmembran (8) nach Verlassen des Fällungsbades (6) auf Länge geschnitten wird.

8. Verfahren nach einem der Ansprüche 1 bis 7, **dadurch gekennzeichnet, dass** der Gewebeschlauch (1) vor seiner Beschichtung oder nach Verlassen des Fällungsbades (6) in vorgegebenen Abständen verschlossen wird und dass der das Fällungsbad (6) verlassende Membranschlauch so auf Maß geschnitten wird, dass Kapillarmembranen mit jeweils einem offenen und einem geschlossenen Ende entstehen.

9. Verfahren nach Anspruch 8, **dadurch gekennzeichnet, dass** der Gewebeschlauch (1) durch thermisches Verschweißen oder Ultraschallschweißung verschlossen wird oder dass zu diesem Zwecke eine Polymerlösung in den Gewebeschlauch (1) injiziert wird, die im Fällungsbad (6) und/oder einem Nachfällungsbad (12) einen festen Pfropf bildet.

## Claims

1. A method for producing fibre-reinforced membranes in the form of capillaries, in which a fabric tube (1) is coated with a polymer solution and passed through a precipitation bath (6), wherein the polymer solution is converted into a microporous film in the precipitation bath (6) and a membrane reinforced by the fabric tube is formed, **characterized in that** the fabric tube (1) is drawn off from a supply roll (3) via a feed drive (2) and conveyed to device (4) positioned after the feed drive (3) in the direction of transport for the purpose of coating the fabric tube, and that the fabric tube (1) coated with the polymer solution passes through the precipitation bath (6) from top to bottom without mechanical contact, and exits through a nozzle (7) at the bottom, wherein liquid flows out of the nozzle (7), exerts a pulling force stabilising the course of the coated fabric tube and thus on the capillary membrane (8) as it exits the precipitation bath, thereby making it possible for the capillary membrane (8) to pass through the precipitation bath (6) at a speed that is determined by the feed drive (2).

2. The method as recited in claim 1, **characterized in that** an adjustable feed drive (2) is used.

3. The method as recited in either of claims 1 or 2, **characterized in that** the fibre tube coated with the polymer solution passes through a vertically disposed pipe (9) that contains the precipitation bath (6) and is tapered in the manner of a nozzle at its lower end.

4. The method as recited in claim 3, **characterized in that** a precipitating agent is fed to the pipe in a metered quantity that is calculated such that limit value for the temperature and/or the permitted solvent concentration are maintained in the precipitation bath (6), wherein only a partial flow of the precipitating agent fed to the pipe (9) flows through the nozzle-shaped constriction at the bottom end of the pipe, and the other part of the precipitating agent fed into the pipe is extracted from the pipe at a different point (11).

5. The method as recited in claim 4, **characterized in that** the precipitating agent is fed into the pipe at a lower section (10) thereof and an overflow (11) is drawn off at the upper end of the pipe.

6. The method as recited in any of claims 1 to 5, **characterized in that** the capillary membrane (8) exiting the precipitation bath (6) is conveyed to a post-precipitation bath (12) for further treatment without any mechanical contact of the membrane surface.

7. The method as recited in any of claims 1 to 6, **characterized in that** the capillary membrane (8) is cut to length after it exits the precipitation bath (6).

8. The method as recited in any of claims 1 to 7, **characterized in that** the fabric tube (1) is sealed at predetermined intervals before it is coated or after it leaves the precipitation bath (6), and that the membrane tube leaving the precipitation bath (6) is cut to size in such manger that capillary membranes are created, each of which has one open and one closed end.

9. The method as recited in claim 8, **characterized in that** the fabric tube (1) is sealed by heat sealing or ultrasonic welding, or that for this purpose a polymer solution is injected into the fabric tube (1) and forms a solid plug in the precipitation bath (6) and/or a post-precipitation bath (12).

## Revendications

1. Procédé de fabrication de membranes de forme capillaire à renfort textile, dans lequel on revêt un boyau textile (1) d'une solution polymère et on le conduit à travers un bain de précipitation (6), une transformation de la solution polymère en une couche microporeuse s'effectuant dans le bain de précipitation (6) et une membrane renforcée par le boyau textile se formant, **caractérisé en ce que** le boyau textile (1) est retiré au moyen d'un entraînement d'avance (2) d'un rouleau de réserve (3) et amené vers une installation (4) disposée derrière l'entraînement d'avance (3), dans le sens de transport pour le revêtement du boyau textile et **en ce que** le boyau textile (1) revêtu de la solution polymère traverse le bain de précipitation (6) sans contact mécanique, du haut vers le bas et sort par une buse (7) placée sur le côté inférieur, du liquide exerçant sur la membrane capillaire (8) qui quitte le bain de précipitation une force de traction stabilisant la course du boyau textile revêtu et permettant que la membrane capillaire (8) traverse le bain de précipitation (6) à une vitesse prédéfinie par l'entraînement d'avance (2) s'écoulant de la buse (7).

2. Procédé selon la revendication 1, **caractérisé en ce qu'**on utilise un entraînement d'avance (2) réglable.

3. Procédé selon la revendication 1 ou 2, **caractérisé en ce que** le boyau textile revêtu de la solution polymère traverse un tube (9) disposé à la verticale, lequel contient le bain de précipitation (6) et comporte sur son extrémité inférieure un rétrécissement en forme de buse.

4. Procédé selon la revendication 3, **caractérisé en ce qu'**il est amené vers le tube du produit précipitant dans une quantité de charge qui est dimensionnée de sorte que dans le bain de précipitation (6), des valeurs limites pour la température et/ou la concentration autorisée de concentration de produit précipitant soient respectées, alors que seulement un flux partiel du produit précipitant amené vers le tube (9) s'écoule par le rétrécissement en forme de buse sur l'extrémité inférieure du tube et l'autre partie du produit précipitant amené est retirée en un autre endroit (11) du tube.

5. Procédé selon la revendication 4, **caractérisé en ce que** le produit précipitant est amené vers un tronçon inférieur du tube (10) et un trop-plein (11) est retiré sur l'extrémité supérieure du tube.

6. Procédé selon l'une quelconque des revendications 1 à 5, **caractérisé en ce que** la membrane capillaire (8) quittant le bain de précipitation (6) est amenée sans contact mécanique avec la surface de la membrane pour le conditionnement ultérieur vers un bain de post-précipitation (12).

7. Procédé selon l'une quelconque des revendications 1 à 6, **caractérisé en ce qu'**après avoir quitté le bain de précipitation (6), la membrane capillaire (8) est coupée en longueur.

8. Procédé selon l'une quelconque des revendications 1 à 7, **caractérisé en ce qu'**on ferme le boyau textile (1) à des distances prédéfinies, avant qu'il ne soit revêtu ou après qu'il ait quitté le bain de précipitation (6) et **en ce qu'**on coupe à dimension le boyau de membrane quittant le bain de précipitation (6), de sorte à donner naissance à des membranes capillaires ayant chacune une extrémité ouverte et une extrémité fermée.

9. Procédé selon la revendication 8, **caractérisé en ce qu'**on ferme le boyau textile (1) par soudage thermique ou par soudage aux ultrasons ou **en ce qu'**on injecte à cette fin dans le boyau textile (1) une solution polymère qui dans le bain de précipitation (6) et/ou dans un bain de post-précipitation (12) forme un bouchon solide.
